# EUROPEAN PATENT SPECIFICATION

(11) **EP 2 652 630 B1**
(45) Date of publication and mention of the grant of the patent: **11.05.2016**
(21) Application number: 11847913.8
(22) Date of filing: 19.12.2011
(51) Int. Cl.: G06F 15/16, G06Q 30/02, G06F 17/30, H04L 29/06, H04L 29/08, G07F 7/10, G06F 9/445, G06Q 20/32, H04W 4/18, H04W 4/20, H04L 12/58, G06Q 20/36

(54) **PROVIDING A CUSTOMIZED APPLICATION TO A USER TERMINAL**
BEREITSTELLUNG EINER ANGEPASSTEN ANWENDUNG FÜR EIN BENUTZERENDGERÄT
FOURNITURE D'UNE APPLICATION PERSONNALISÉE À UN TERMINAL UTILISATEUR

(30) Priority: 17.12.2010 FI 20106335
(43) Date of publication of application: 23.10.2013
(73) Proprietor: Intellipocket Oy, 00180 Helsinki (FI)
(72) Inventor: REHTIJÄRVI, Pekka, FI-00180 Helsinki (FI)
(74) Representative: Kolster Oy Ab
(86) International application number: PCT/FI2011/051132
(87) International publication number: WO 2012/080580

(56) References cited:
- EP-A1- 2 367 148
- WO-A1-2010/063200
- JP-A- 2009 237 894
- US-A1- 2005 070 257
- US-A1- 2007 241 189
- US-A1- 2007 250 711
- US-A1- 2008 294 655
- US-A1- 2009 008 445
- US-A1- 2009 119 678
- US-A1- 2011 300 834
- US-A1- 2011 307 377
- 'Mobiilikortti FAQ', [Online] 09 May 2012, Retrieved from the Internet: Mobiilikortti FAQ'biilikortti.com/docs/FAQ. pdf>
- 'Mobiilikortti pikaopas', [Online] 09 May 2012, Retrieved from the Internet: <URL:http://cdn.mobiilikortti.com/docs/www- pikaopas.pdf>

## Description

### Field of the invention

The invention relates to methods, apparatuses and software products for providing customized applications that are to be downloaded to user terminal, such as mobile communication terminals.

An electronic customer loyalty card with embedded functionality serves as an illustrative but non-restrictive example of a customized downloadable application.

A smart mobile phone constitutes a prime example of such terminals, but the ability to initiate or receive calls is not absolutely necessary for the invention. In addition to smart mobile phones, an illustrative but non-exhaustive list of terminals that may be adapted to employ the inventive technique includes digital communication terminals, digital cameras, satellite navigation devices, or the like.

### Background of the invention

Customer loyalty cards are traditionally embodied as plastic cards with magnetic stripes that are readable by a magnetic card reader operatively coupled to a checkout terminal, such as a cash register. Such plastic loyalty cards involve certain problems. For example, administration and mailing of the cards is a labour-intensive operation for the issuing companies. Furthermore, the necessity of carrying around a number of physical cards is a burden on the consumers. US patent application 2009/0012900, titled "Making Secure Data for Customer Loyalty Programs" addresses various techniques for implementing electronic loyalty cards. US patent application 2007/241189, titled "Using validity events to control the use of coupons containing barcodes in mobile devices that display the barcodes for reading by barcode readers" discloses a technique for ensuring that a device that contains coupons with barcodes will not output a barcode belonging to an invalid coupon to a barcode reading system.

Replacement of the traditional loyalty cards by their electronic equivalents poses new security threats, particularly if the benefits provided by the various loyalty cards are supposed to be variable, which means that some loyalty cards provide benefits not provided by others. Obviously, the loyalty cards should be tamper-proof, which goal is typically reached by means of cryptographic techniques. But the use of cryptographic techniques and a feature set which depends the customer and the technical parameters of the customer's terminal involves problems that are not adequately addressed in the prior art.

### Brief description of the invention

An object of the invention is to develop techniques for providing customized applications that are to be downloaded to user terminal in a cost-effective manner which does not compromise data security. The customized applications reflect terminal-specific properties and, optionally, user-specific parameters. A further object of the invention is to facilitate distribution of applications, such as loyalty cards, coupons or the like. The objects of the invention are attained by methods and apparatuses as defined in the attached independent claims. The dependent claims and the following detailed description, along with the attached drawings, describe specific embodiments which solve residual problems and/or provide additional features.

An aspect of the invention is a method for providing a customized application to a plurality of user terminals, wherein the customized application is customized in respect of at least terminal-specific properties and the plurality of user terminals comprises at least a first user terminal and a second user terminal, the first user terminal, which is not the same terminal as the second user terminal, stores a version of the customized application.

The method comprises the following acts which are labelled a through i solely for the purpose of facilitating discussion. Such labelling does not imply that the acts must be performed in the following order:
a) an application server storing identifying information of the user terminals and/or their associated subscriptions;
b) the application server storing a template for the customized application and a feature set for each of several terminal types;
c) the first user terminal sending a community message to the second user terminal, which is selectable via a user interface of the first user terminal; wherein the community message comprises a link for directing the second user terminal to a network address of the application server;
d) wherein activation of the link in the second user terminal initiates transmission of a request to the application server for creation of the customized application;
e) the application server determining identifying information of the second user terminal and/or its associated subscription, and a type of the second user terminal based on the request for the customized application;
f) the application server determining the terminal-specific properties based on the determined type of the user terminal;
g) the application server creating the customized application based on the template and the terminal-specific properties;
h) wherein the customized application comprises a feature to send the community message to at least one further user terminal other than the second user terminal, which is selectable via a user interface of the second user terminal;
i) inserting the customized application into a set of delivery files for a data communication system and transmitting the set of delivery files to the second user terminal.

In a) the application server stores identifying information of the user terminals and/or their associated subscriptions. This feature serves both technical and business needs. For instance, if the application is a web application, execution of the web application requires that the application server executes a copy of the web application specifically customized for the specific user terminal, and optionally for its user (subscriber). In b) the application server stores a template for the customized application and a feature set for each of several terminal types. By virtue of the template and the numerous feature sets the application server is able to provide application specifically customized to several different types of user terminals.

In c) the first user terminal sends a community message to the second user terminal, which is selectable via a user interface of the first user terminal. The community message comprises a link for directing the second user terminal to a network address of the application server. Technically the community message can be any type of message that can be transmitted in the access network serving the user terminals. The significance of the community message is that by members of the community facilitate knowledge of application useful in the respective community. In d) activation of the link in the second user terminal initiates transmission of a request to the application server for creation of the customized application. This feature facilitates downloading of the application into the second user terminal as the user of the second user terminal only needs to activate the link and need not find out proper download addresses or the like.

In e) the application server determines identifying information of the second user terminal and/or its associated subscription, and a type of the second user terminal based on the request for the customized application. Determination of the type of the second user terminal becomes useful in f) wherein the application server determine the terminal-specific properties based on the determined type of the second user terminal. Furthermore, the application server may transmit such identifying information on the second user terminal and/or its user, as well as identifying information on the customized application to one or more databases for administrative purposes. According to an optional feature, the application server may determine identifying information also in respect of the first user terminal, ie, the user terminal that transmitted the community message with the link to the second user terminal to which the customized application is now being generated. By way of example, identifying information on the first (originating) user terminal may be used to credit the user or subscriber of the first user terminal for distributing the application.

In g) the application server creates the customized application based on the template and the terminal-specific properties. The customized application comprises a feature to send the community message to at least one further user terminal other than the second user terminal, which is selectable via a user interface of the second user terminal. That way the application can be distributed within the community, yet be customized for each type of user terminat, and optionally its user.

In i) the application server inserts the customized application into a set of delivery files for a data communication system and transmits the set of delivery files to the second user terminal. To do so, the application server needs to communicate with the second user terminal via intervening networks, such as a data network (eg the internet) and/or access networks, such as cellular mobile networks.

Another aspect of the invention is an access server configured to execute the acts of the inventive method which are performed by the application server.

Commonly-owned patent applications, which are identified as reference documents [1] through [3] at the end of this patent specification, disclose specific solutions to the above problems. These reference documents were not public at the priority date of the present application, which is why their entire disclosure is repeated and identified as necessary, and modifications provided by the present invention are presented as needed.

Said commonly-owned reference documents [1] through [3] disclose a method for providing a user terminal with a customized application, wherein the application is customized in respect of user-specific parameters and terminal-specific properties, the method comprising performing the following acts by an application server:
- storing a template for the customized application and a feature set for each of several terminal types;
- receiving a request for creation of the customized application, and based on the request the application server determines the user-specific parameters;
- sending the user terminal a first data message which triggers a request from the user terminal;
- determining a type of the user terminal based on the request from the user terminal;
- determining the terminal-specific properties based on the determined type of the user terminal;
- creating the customized application based on the template, the user-specific parameters and the terminal-specific properties; and
- inserting the customized application into a set of delivery files for a data communication system and transmitting the set of delivery files to the user terminal.

As will be apparent from the following detailed description, the purpose of the application server sending the first data message which triggers a request from the user terminal is that this is how the application server can obtain a message (the request) from the user terminal that does not send the request spontaneously. The application server uses the request from the user terminal to determining a type of the user terminal, and the determined type may be used to determine the terminal-specific properties of the user terminal. These features may optionally be used in connection with the present invention, but they are not strictly mandatory. Similarly, customization of the application in respect of the user-specific parameters is an optional but not mandatory feature of the present invention.

A further residual problem in the technique disclosed in reference documents [1] through [3] is that provisioning of stand-alone (self-sufficient) applications to some terminal platforms is very difficult. Some terminals are designed to execute only applications certified by the terminal manufacturer. Such restrictions are appropriate for mass-marketed applications but prohibitive to customized applications, of which each version is unique. Thus it is an object of the present invention to overcome this residual problem, in addition to the problems identified earlier. In summary, it is the object of the present invention to provide customized functionality comparable to that provided by customized applications, at a secure and cost-effective manner, which is compatible with terminals that impose certification requirements to applications.

The residual problem, which relates to the certification requirements imposed by certain terminals or, actually, terminal manufacturers, is overcome by providing the customized functionality in the form of web applications. As used herein, a web application means a set of information material from which web pages may be constructed. An illustrative but non-restrictive list of such information material includes images, text, code segments in markup languages such as HTML and XHTML, stylesheets such as CSS, script languages such as JavaScript, video and audio, as well as various browser plug-in content such as Flash, Silverlight and Java Applet content.

Unlike a stand-alone application, a web application typically does not require certification by terminal manufacturers. Therefore the feature of providing the customized functionality in the form of web applications overcomes the certification-related residual problem. At the same time, the use of web applications for providing the customized functionality causes a different residual problem, which is related to the fact that web applications are not self-sufficient applications. Instead a copy of the web application is needed at either end of the client (terminal) - server pair. This means that the technique disclosed in the commonly-owned reference documents [1] through [3] is insufficient without additional considerations. In one implementation, the server for the web application stores (caches) a copy of each customized web application that the server may need to serve. Such caching of the copy of specific customized web applications shall be continued for the predefined lifetime of that customized web application. In an alternative implementation, the server for the web application stores (caches) parameters for creating or re-creating the customized web application on the fly, and re-creates the customized web application in response to a detected contact from the terminal.

Much of the following detailed description is identical with portions of the reference documents [1] through [3]. Unless stated otherwise, an application can refer to a web application or stand-alone (self-sufficient) application alike.

An embodiment of the invention comprises performing header manipulation on the set of delivery files. The header manipulation operation simplifies delivery of the customized application because the terminal user need not initialize any application-downloading operations. Rather the application server is able to provide the customized application as a response to the request from the user terminal.

The determination of the terminal-specific properties based on the determined type of the user terminal may comprise an inquiry to an equipment database, which receives an identifier of a terminal type as an input and provides the properties of that terminal type as a response.

In one embodiment, the creation of the customized application based on the terminal-specific properties may comprise formatting image information based on the user terminal's screen properties. For example, a two-dimensional barcode may be optimally centered and scaled for the display properties of the terminal type, and an appropriately-dimensioned white margin may be provided around the 2D barcode in order to facilitate scanning of the barcode.

In another embodiment the template for the customized application comprises information common to several human languages, and the creation of the customized application may also comprise determination of the human language selected for the terminal user. Based on the determined human language, the application server may retrieve human-language-dependent text elements from a language database.

In yet another embodiment the customized application comprises a concatenation of a network address and identifying information, wherein the network address specifies an address which the user terminal is supposed to contact upon activation of the customized application, and the identifying information identifies the user terminal, its user and/or the customized application. A benefit of this feature is that the terminal user neither has to navigate to the server associated with the application, nor does the user have to identify him/herself with that server. In order to protect user privacy, the customized application may comprise said concatenation in an encrypted form.

Another aspect of the invention is a computer system for providing a user terminal with a customized application. The computer system comprises means for performing the steps of inventive method.

Yet another aspect of the invention is a software product, executable in a computer system, wherein execution of the software product in the computer system causes the computer system to carry out the inventive method.

### Brief description of the drawings

In the following the invention will be described in greater detail by means of specific embodiments with reference to the attached drawings, in which:
Figure 1 shows an exemplary system architecture in which the invention can be used;
Figure 2 is a signalling diagram which shows an exemplary use case of the invention in connection with dispatching of electronic loyalty cards;
Figure 3 shows an appropriately manipulated header, by means of which the application server is able to send the customized application as a response to the user terminal's http page request;
Figure 4 shows a two-dimensional barcode optimally formatted for the display screen of a specific user terminal;
Figure 5 shows a definition file for a customized electronic loyalty card;
Figures 6 and 7 illustrate embodiments relating to delivery and execution of customized web applications;
Figure 8 schematically shows a block diagram of a server system configured to act as one or more of the various servers shown in Figure 1; and
Figure 9 illustrates use of community messages, in which friend relations within a community are utilized to facilitate distribution of customized applications.

### Detailed description of specific embodiments

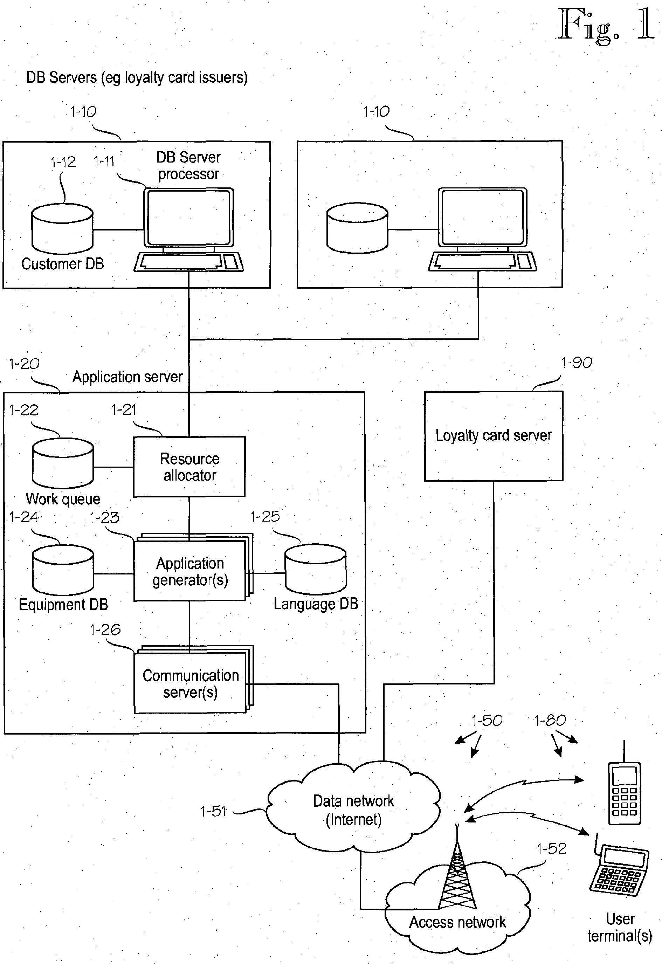

Figure 1 shows an exemplary system architecture in which the invention can be used. The four major subsections of Figure 1 are a set of database servers 1-10, an application server according to an embodiment of the invention, generally denoted by reference numeral 1-20, a telecommunication network (signalling system) 1-50 and a number of user terminals, generally denoted by reference numeral 1-80. As shown in Figure 1, the user terminals 1-80 differ from one another in respect of various properties, including the resolution of their displays.

In the exemplary implementation shown in Figure 1, each database server 1-10 comprises a database server processor 1-11 and a database 1-12, such as a customer database that stores data relating to customer-specific loyalty cards. As regards hardware, the database servers may represent conventional technology. For the purposes of the invention it suffices that the database servers 1-10 are capable of requesting the customized application, such as a loyalty card, from the application server 1-20. The customer-specific parameters required for the delivery of the loyalty card can be provided in the request message sent to the application server 1-20. Alternatively, the database server 1-10 should be capable of providing such customer-specific parameters in a response to a separate customer parameter inquiry from the application server 1-20.

As shown in the exemplary implementation shown in Figure 1, the application server 1-20 comprises a resource allocator 1-21 and a work queue 1-22 for distributing processing resources among several application requests from the one or more database servers 1-10. The processing resources are represented by application generators 1-23, which may be implemented as appropriately programmed data processors. The required programming will be apparent in connection with the following description of the invention and its embodiments. For adapting the requested applications, such as loyalty cards, to the properties of the various user terminals 1-80, the application server 1-20 comprises an equipment database 1-24. Alternatively or additionally, the application server 1-20 may be operatively coupled to an external equipment database (not shown separately). By consulting an optional language database 1-25, the application server may be able to prepare customized applications in several human languages. One or more communication servers 1-26 serve to distribute the generated applications among the user terminals 1-80 via the telecommunication networks 1-50.

In a typical network architecture, the telecommunication networks 1-50 comprise a data network 1-51, which typically is the internet, and an access network 1-52, which typically is a cellular mobile network, a wired or wireless local-area network, or the like. Details of the telecommunication networks 1-51, 1-52, such as intervening network elements, are omitted for the sake of clarity, as such elements represent conventional technology. Alternatively or additionally, a user terminal 1-80 may be coupled to a personal computer (not shown) via a short-range connection, such as an infrared or Bluetooth connection, wherein the personal computer is connected to the application server 1-20 via the internet 1-51. Finally, reference numeral 1-90 denotes a representative server to be contacted on activation of the customized application in the user terminal. In the exemplary case of the loyalty card, the server 1-90 is the server via which the terminal users may obtain status information concerning their loyalty card accounts.

As regards system architecture, Figure 1 shows a rather complex, scalable implementation which is capable of supporting a large number of user terminals and issuers of loyalty cards (or other kinds of database servers). For less demanding environments, the invention can be implemented in a less ambitious manner. For example, there may be only one application generator 1-23 and only one communication server 1-25, and in environments which do not require multiple instances of these elements, the resource allocator 1-21 may be omitted as well. In yet another implementation, the application server 1-20 may be installed at the sites of the database servers 1-10.

As regards hardware, the application server may be implemented by means of conventional server technology. The novel elements of the invention may be embodied in appropriate programming of computerized data processing systems and databases. Specifically, the one or more application generators perform the customization and creation of the application, after which the application is conveyed to a communication server for delivery to the user terminal. The servers are data processors with associated memory and peripheral hardware. Thus the invention can be embodied as a software product which is storable in the memory of the application server, such that execution of the inventive software product in the application server causes it to carry out the inventive method.

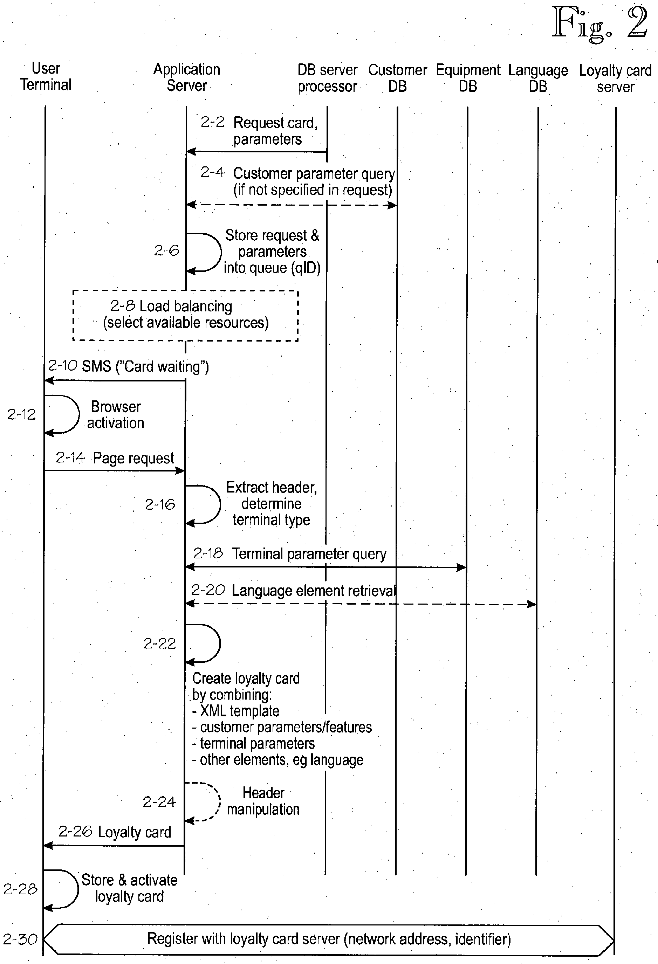

Figure 2 is a signalling diagram which shows an exemplary use case of the invention in connection with dispatching of electronic loyalty cards. In Figure 2, time advances from top to bottom, and dashed lines indicate optional acts, ie, acts which are not strictly essential but solve specific residual problems and/or provide additional benefits. In step 2-2, the database server (item 1-10 in Figure 1) sends the application server a request for a customized application, such as a loyalty card. The request should include the necessary customer-specific parameters, such as the name and identifier (id) of the customer, the name and id of the issuer of the loyalty card, the loyalty card's name and type, in cases wherein there are several versions, such as a "gold" card, a "silver" card, or the like. Understanding the invention or its embodiments does not necessitate enumeration of all the possible customer-specific and/or issuer-specific parameters. Rather it suffices to say that each loyalty card is individually prepared for a specific customer. It should be noted that each loyalty card will also be individually prepared for the customer's specific terminal, but the database server 1-10 does not keep track of terminal-specific property information. Rather the terminal-specific property information will be determined and used for the customization of the loyalty card later, in connection with steps 2-10 through 2-26.

Normally the database server processor includes all the customer-specific parameters in the request 2-2 for the customized loyalty card. On the other hand, if the card request message 2-2 does not provide all the necessary information for the preparation of the card, the application server may send a separate inquiry 2-4 to the card issuer's customer database. In step 2-6 the application server's resource allocator 1-21 stores the request and the customer-specific parameters into the work queue 1-22 and assigns a queue identifier (qID) to the request. In a multi-processor implementation, the application server may perform an optional step 2-8, which involves load balancing operations, such as selecting and/or waiting for available resources.

At this point the application server has the necessary customer-specific parameters. What it does not have is the customer's terminal-specific property information, such as screen size or resolution and the ability to support various optional features. Interestingly, current Java-enabled mobile terminals do not provide an easy answer to the question of how to request the terminal to indicate its own screen size or resolution to the application server. In a straightforward implementation the customer could log in to some web server and indicate his/her terminal type, whereby such information could be obtained from the customer. In another implementation, a short program routine could be first downloaded, for the purpose of determining and reporting the screen parameters. Figure 2 shows an embodiment which is capable of determining the terminal type in a more or less automated manner. The automatic determination of the terminal type is initiated in step 2-10, which involves sending a data message, such as a short message, to the user terminal. The short message essentially indicates to the terminal (or its user) that a customized loyalty card is about to be delivered. The short message preferably indicates a network address of the application server and a temporary identifier of the user terminal. For example, the network address may be of the following form: http://application-server.mobi/customer/23456

In the above network address, application-server.mobi is the application server's network address, while customer/23456 is the temporary identifier assigned to the user terminal. In response to the short message, which includes the network address of the application server, the user terminal may propose activation of a web browser to this network address, in which case the terminal waits for the user's acceptance before navigating to the network address. Alternatively, the user terminal may be configured to navigate to the network address without requiring the user's acceptance. As a third alternative, the terminal user may pick up the network address from the short message and navigate to that address himself/herself. In any case the user terminal navigates to the application server's network address in step 2-14. Inclusion of the user's or user terminal's temporary identifier in the messages 2-10 and 2-14 helps the application server to identify the user terminal, and the user does not have to perform a separate login procedure.

As is well known, navigation to a network address by a web browser normally involves requesting a web page (hypertext markup language, HTML, page) from the network address. Now, if the application server responded to the user terminal's web page request by directly downloading the customized application (loyalty card), two problems could be seen. A first problem is that the customized application does not reflect the user-terminal's terminal-specific properties. The other problem is that the user terminal's browser would be confused by receiving a program in response to the request for a web page.

The first problem, which relates to the customization of the loyalty card by the terminal-specific properties is solved in the following manner. In step 2-16 the application server extracts the data packet's header from the request for the web page that the user terminal sent in step 2-14. From the packet header the application server determines the type, ie, manufacturer and model, of the user terminal. In step 2-18 the application server sends a terminal parameter inquiry to the equipment database and obtains the terminal parameters in the response to the inquiry. At this point the application server has all the information it needs to customize the loyalty card in respect of both customer-specific parameters and terminal-specific properties.

Next, in step 2-22, the application server creates the customized loyalty card. In a representative implementation, the application server creates the customized loyalty card by starting with a loyalty card template information. The application server then combines the template information with the customer-specific parameters and/or features and the terminal-specific properties. In a representative but non-restrictive implementation the template information is stored as a file in a self-documenting modelling language, such as XML (extendible modelling language). The template information defines the functionality of the customized application. One of the features defined by the template is an associated network address, such as a URL (uniform resource locator) address, which the user terminal is to contact on activation of the customized application. Under the assumption that the customized application is a loyalty card, the network address is typically that of the loyalty card server (item 1-90 in Figure 1). The network address may be of the following form: http://loyalty-card-server.mobi

As briefly stated in connection with Figure 1, the application server 1-20 may comprise an optional language database 1-25, by means of which the application server is able to prepare customized applications in multiple human languages. If multiple human languages are to be supported, the request message 2-2 from the database server should include an identifier of the human language selected for the loyalty card (or other type of application). In one implementation, the language database comprises a separate version of the template file for each supported human language. A drawback of this implementation is that the functionality of the customized application, which is stored in the template file(s), must be separately maintained for each template file version. An improved implementation of the multi-language support involves a common template for all supported languages. The common template file may comprise a placeholder, such as a text identifier, for each language-dependent text element. Based on the text identifier and the language identifier, the application generator 1-23 queries the language database 1-25 for the each language-dependent text element. While this step is not shown separately, it is analogous with the query 2-18 to the equipment database.

A combination of the loyalty card template information with the customer-specific parameters and terminal-specific properties results in a loyalty card which is individually customized for the customer and their terminal. The remaining, optional, operations in the card-preparation phase relate to formatting of image information, data security and/or prevention of fraudulent behaviour.

One of such optional operations involves concatenating the network address associated with the customized application with an identifier of the loyalty card, the user terminal or its user. Such a concatenation of a network address and the identifier of the loyalty card may take the following form: http://loyalty-card-server.mobi/acme_card456789

Herein, acme card456789 is the identifier of the individual user's loyalty card. In the loyalty card example, the concatenation of the user identifier with the URL of the loyalty card server has the benefit that the terminal user may simply select an activity, such as "my account", from the loyalty card application's menu, and the application directs the user terminal's browser to the loyalty card server associated with that URL. The server may then use the user identifier to determine the identity of the incoming user and provide him/her, with proper user-specific account data.

If the loyalty card comprises a concatenation of the user identifier with the URL of the server associated with the loyalty card server, it is also benefitcial to encrypt the concatenation, or make a multi-byte checksum, such as a hash code of it, so as to hide the identity of the user and to prevent users from querying account data other than their own.

Another optional operation involves incorporating into the customized application some identifying information as a barcode. The identifying information may identify the user, the user terminal and/or the customized application, such as the loyalty card. For example, the loyalty card's identifier could be embedded into the loyalty card in the form of a two-dimensional barcode, which is readable by optical scanners. While it is self-evident that the two-dimensional barcode reflects the identifier of the loyalty card, it may not be equally self-evident that the bard code should also reflect the properties of the user terminal, most notably its screen size and/or resolution. The barcode should ideally be formatted, that is scaled and positioned, such that the actual barcode is surrounded by a white margin with a width of approximately one centimetre, and the actual barcode optimally fills the space remaining inside the white margin. The white margin helps optical scanners to isolate the barcode from its surroundings. In order to dimension the barcode and the white margin optimally, the application server should determine the user terminal's parameters beforehand, as was explained in connection with steps 2-14 through 2-18. Other images may be formatted in an analogous manner.

At this point all the information for the customized loyalty card has been assembled by the application generator. Next the assembled information is packaged into a set of delivery files, the format of which depends on the type of the user terminal. For example, Java-enabled mobile terminals may be supported by means of .jar and .jad files. The .jar file contains all the functionality of the application, that is, the information from the template file, the optional language-dependent text elements, the user-specific features and the terminal-specific properties. The .jad file, on the other hand, contains a Java Application Descriptor which, for instance, may be displayed via the terminal's display to indicate descriptor information associated with the application, such as author, version, application size, or the like.

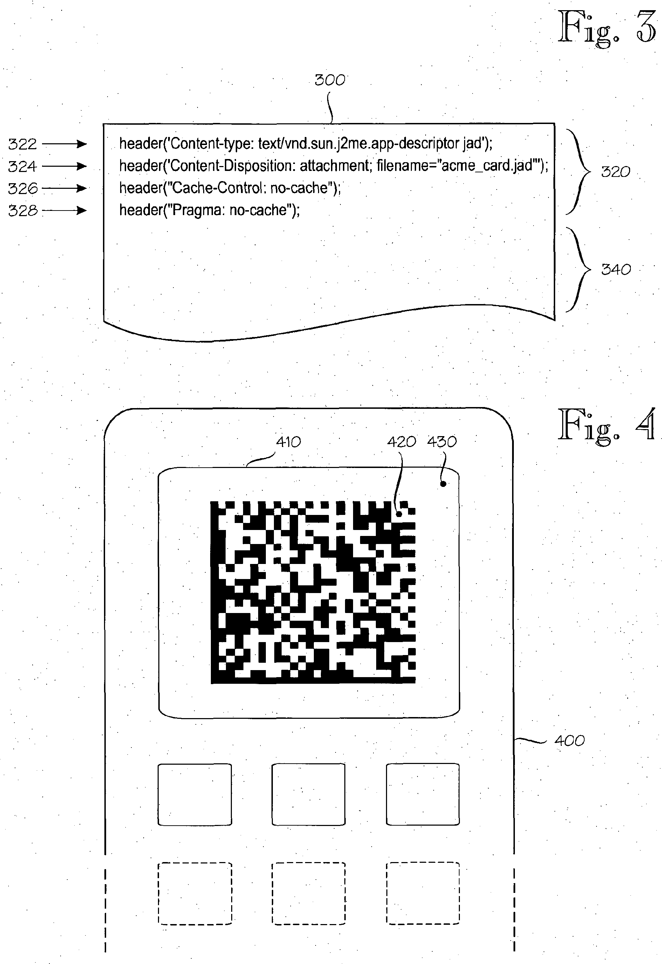

At this point the customized loyalty card is ready for delivery to the user terminal. A well-known method of delivering a Java application to a mobile terminal is to send the mobile terminal a message that includes one or more links. By clicking the link, the terminal user can initiate downloading of the customized application. Step 2-24 of Figure 2 relates to a more elegant delivery technique, in which the customized loyalty card is provided to the user terminal as an automated response to the page request 2-14. A residual problem herein is that the user terminal's browser requested an http page, while the application server is about to deliver a program, namely the customized application. Accordingly, in step 2-24, the application server performs a header manipulation operation, as a result of which the application server will be able to send the customized application as a response to the user terminal's page request 2-14. An example of an appropriately manipulated header will be shown in Figure 3.

In step 2-26 the customized application, such as the loyalty card, is delivered to the user terminal. In step 2-28 it is stored in the user terminal's application memory and registered as an executable application. Steps 2-26 and 2-28 can be performed by conventional technology.

Finally, in step 2-30, the user terminal logs in with the loyalty card server (item 1-90 in Figure 1). Provided that the loyalty card includes a concatenation of the loyalty card server's network address and the identifier of the loyalty card, the terminal user only needs to select the loyalty card from the terminal's menu, after which the customized loyalty card application contacts the loyalty card server's network address, and the loyalty card server extracts the loyalty card's information from the terminal's initial message. After that, the usage of the loyalty card may continue in a more or less conventional manner.

Figure 3 shows an appropriately manipulated header, by means of which the application server is able to send the customized application as a response to the user terminal's http page request. Reference numeral 300 generally denotes a .jad (Java Application Descriptor) file, which comprises a header portion 320 and a body portion 340. The latter is entirely conventional and has been hidden for the sake of clarity. In the present example, the header portion 320 comprises four lines, of which the two first lines 322 and 324 relate to the header manipulation shown as step 2-24 in Figure 2. Line 322 indicates a content type for the application descriptor, while line 324 indicates the content disposition for the actual loyalty card, which is sent as an attachment file. Optional lines 326 and 328, which relate to data security, indicate that the transmission should not be cached.

Figure 4 shows a two-dimensional barcode 420 optimally formatted for the display screen 410 of a specific user terminal 400. The barcode 420 is centered within the display screen 410 and a white margin 430 of at least a few millimetres surrounds the barcode 420, so as to facilitate optical scanning of the barcode. Optimal formatting of the barcode may require information on the display screen in terms of both dimensions and resolution. Assume, for example, that the display screen 410 measures 40 mm and 240 pixels in either direction, which translates to 6 pixels/mm. A white margin of, say, 5 mm on either side of the bar code means 10 mm or 60 pixels in total. Thus the actual barcode 420 should span an area of 240-60=180 pixels across. The 2D barcode 430 shown in this example has 26 bits of information in either direction, which means that each bit of the 2D barcode should be drawn with a grid of 6*6 or 7*7 display pixels (180/26=6.92).

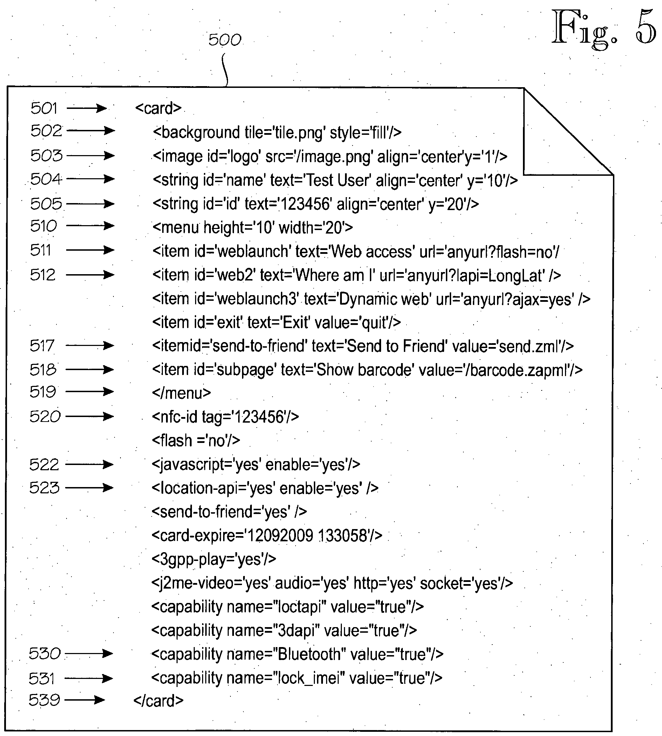

Figure 5 shows a definition file 500 for a customized electronic loyalty card The description language being used is a derivative of XML, and those skilled in the art are likely to find that the definition file 500 is largely self-documenting. For instance, line 501 begins the definition of the card, while line 539 ends it. Line 502 defines a file to be displayed as background graphics, while line 503 defines an image to be displayed superimposed on the background graphics, and so on. Lines 503 and 504 define identifiers for the terminal user and the loyalty card, respectively.

Line 510 begins a definition of a menu, while line 519 ends the menu definition. The selectable items of the menu are defined by the lines between the lines 510 and 519. For example, line 511 provides a definition for a menu item whose activation will provide web access to the terminal user. Line 512 defines a menu item for a positioning application. Line 517 defines a menu item for a "send to a friend" function that may or may not be implemented, depending on the specific user. Line 518 defines a barcode, as was described in connection with Figure 4. Lines 520 through 531 define various properties and capabilities of the terminal type. For instance, lines 522 and 523 indicate that the terminal for which the card definition file 500 is customized, supports Java script and a location application, respectively. Lines 530 and 531 indicate that the terminal supports Bluetooth and network-originated IMEI locking, respectively.

As shown in Figure 5, the definition file 500 for the customized electronic loyalty card includes user-specific features, such as the user name on line 504, card-specific features, such as the card's identification on line 505 as well as terminal-specific features, such as the property and capability definitions between lines 520 and 531. The electronic loyalty card can be customized and installed on the user terminal with almost complete automation, in response to request from the database server to the application server (see step 2-2 in Figure 2).

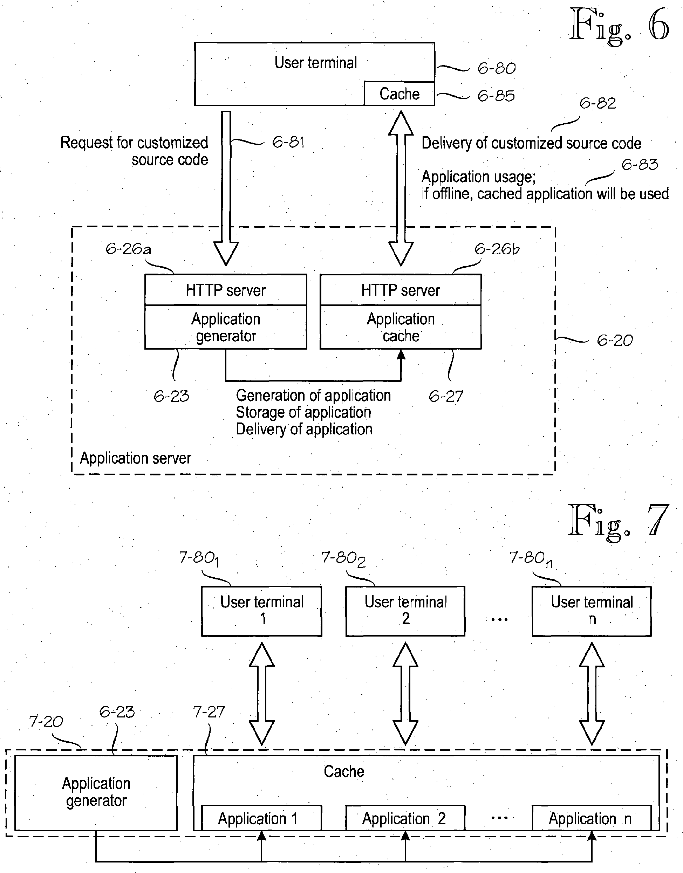

Figures 6 and 7 illustrate embodiments relating to delivery and execution of customized web applications. In Figure 6, reference numeral 6-20 denotes an embodiment of an application server. Still under the assumption that the customized web application is a loyalty card, the application server 6-20 of the present embodiment performs functions similar to those performed by the application server 1-20 and loyalty card server 1-90 shown in Figure 1. In other words, the application server 6-20 of the present embodiment comprises means for creating the customized web application, such as a loyalty card, and means for supporting it during execution (use) of the customized web application. The application server 6-20 comprises HTTP servers 6-26a, 6-26b, which are examples of the communication servers 1-26 shown in Figure 1. The application generator 6-23 generally corresponds to the application generator 1-23 shown in Figure 1, apart from the fact that the application generator 6-23 of the present embodiment is adapted to generate customized web applications.

The embodiment shown in Figure 6 differs from the one shown in Figure 1 in that the request for the customized web application, such as customized source code, denoted by reference numeral 6-81 is transmitted by the user terminal 6-80. It is equally possible to use the feature described in connection with Figure 1, wherein the request for the customized web application (application in Figure 1) is transmitted by the loyalty card issuers, shown as item 1-10 in Figure 1. The request for the customized web application, such as customized source code, is received by the HTTP server 6-26a and processed by the application generator 6-23. The present implementation, wherein the application generator 6-20 receives a request spontaneously requested by the user terminal 6-80 is simpler than the one shown in Figures 1 and 2, in the sense that the application generator 6-20 does not have to send the first data message, shown in Figure 2 as item 2-10, in order to trigger a request from the user terminal. The application generator 6-20 needs a request from the user terminal 6-80 in order to be able to determine the type of the user terminal, because the type will be used to customize the terminal-specific properties of the customized web application.

Regardless of the manner in which the customized web application is requested (that is, spontaneously by the terminal itself, as shown in Figure 6, or from the loyalty card issuer, as shown in Figures 1 and 2), the customized web application, after its generation, is conveyed to an application cache 6-27. The application cache 6-27 delivers the customized web application to the user terminal via HTTP server 6-26b, which delivery is denoted by reference numeral 6-82. The application cache 6-27 also supports execution of the customized web application during use, as denoted by reference numeral 6-83. In the present embodiment, the user terminal 6-80 comprises a cache memory 6-85 for storing a copy of the customized web application for its specified lifetime. Caching the customized web application in the cache 6-85 of the user terminal has the benefit that the cached copy can provide at least limited functionality during offline use. If the copy stored in the terminal cache 6-85 is destroyed, a fresh copy can be requested from the application cache 6-27, and if that copy is destroyed too, a fresh copy can be re-generated by the application generator 6-23.

In the embodiment shown in Figure 6, wherein the request for the customized web application (eg, a loyalty card) is transmitted spontaneously by the user terminal 6-80, the process described in connection with Figure 2 can be used with the following modifications. The process begins at step 2-14, which in the present embodiment is the request for the customized web application. This request identifies both the user and the terminal. Subscriber and equipment identities provided by mobile telephones can be used to identify the user and the terminal, respectively. The user identity is used to retrieve user parameters from the customer database (cf. steps 2-4 and 2-6 in Figure 2), and the step depicted as 2-14 in Figure 2 precedes this customer parameter query. Otherwise the process is largely similar to that described in connection with Figure 2.

Unlike regular (non-customized) web applications, the server supporting execution of the customized web application, shown as items 6-20 and 6-27, must store a copy of each individual customized web application, or be prepared to re-generate and re-transmit it instantly as needed. This feature is clarified in Figure 7, in which the application server, shown as item 7-20, contains an application cache 7-27, which stores a specific copy of a customized web application for each of multiple user terminals 7-80₁ through 7-80ₙ. Figure 7 shows an implementation wherein the customized web applications are not stored in the respective user terminals, but the caching described in connection with Figure 6 can be implemented in the present embodiment as well.

Each of the specific copies of the customized web applications may be tied to its respective user terminals 7-80₁ through 7-80ₙ. For instance, a multibyte checksum, such as a hash code or equivalent, can be computed from parameters specific to each individual terminal. A subscriber identity or equipment identity are illustrative but non-restrictive examples of suitable terminal-specific parameters. Alternatively or additionally, techniques such as generic URL ID compression or generic URL ID encoding can be used.

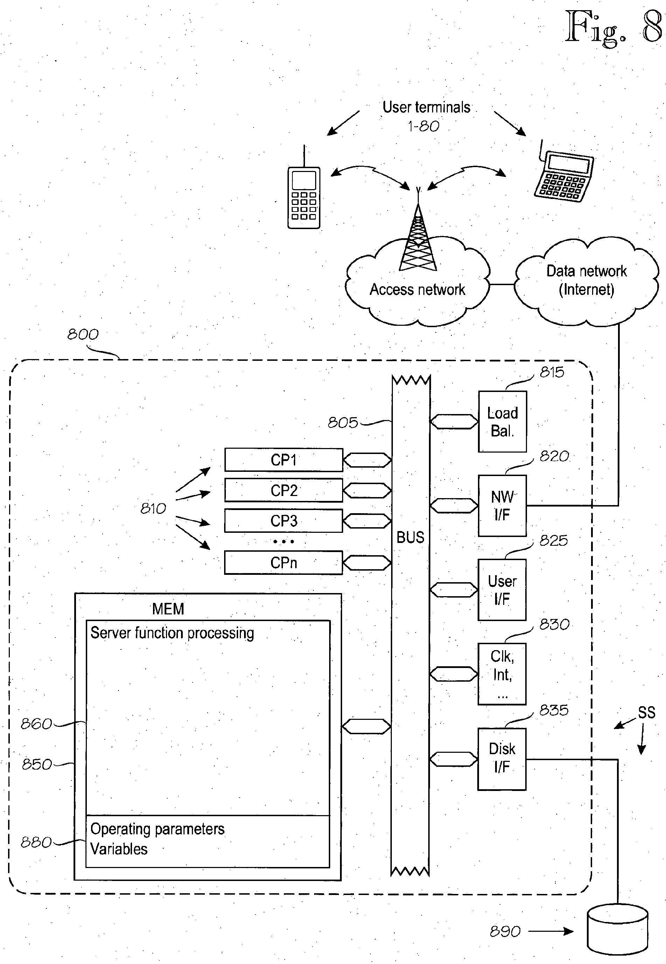

Figure 8 schematically shows a block diagram of a server system SS which is configured to act as one or more of the various servers shown in Figure 1. The two major functional blocks of the server system SS are a database server computer 800 and a disk system 890. The server computer 800 comprises one or more central processing units Cup1 ... CPn, generally denoted by reference numeral 810. Embodiments comprising multiple processing units 810 are preferably provided with a load balancing unit 815 that balances processing load among the multiple processing units 810. The multiple processing units 810 may be implemented as separate processor components or as physical processor cores or virtual processors within a single component case. The server computer 800 further comprises a network interface 820 for communicating with various data networks, which are generally denoted by reference sign DN. The data networks DN may include local-area networks, such as an Ethernet network, and/or wide-area networks, such as the internet. The server system SS serves one or more client terminals, generally denoted by reference sign CT, via the data networks DN.

The server computer 800 of the present embodiment also comprises a user interface 825. Depending on implementation, the user interface 825 may comprise local input-output circuitry for a local user interface, such as a keyboard, mouse and display (not shown). Alternatively or additionally, management of the server computer 800 may be implemented remotely, by utilizing the network interface 820 and a terminal similar to the client terminals CT. The nature of the user interface depends on which kind of computer is used to implement the server computer 800. If the server computer 800 is a dedicated computer, it may not need a local user interface, and the server computer 800 may be managed remotely, such as from a web browser over the internet, for example. Such remote management may be accomplished via the same network interface 820 that the server computer utilizes for traffic between itself and the client terminals.

The server computer 800 also comprises memory 850 for storing program instructions, operating parameters and variables. Reference numeral 860 denotes a program suite for the server computer 800.

The server computer 800 also comprises circuitry for various clocks, interrupts and the like, and these are generally depicted by reference numeral 830. The server computer 800 further comprises a disk interface to the disk system 890. The various elements 810 through 850 intercommunicate via a bus 805, which carries address signals, data signals and control signals, as is well known to those skilled in the art.

The inventive method may be implemented in the server system SS as follows. The program suite 860 comprises program code instructions for instructing the set of processors 810 to carry out the functionality of the various servers, such as the application server.

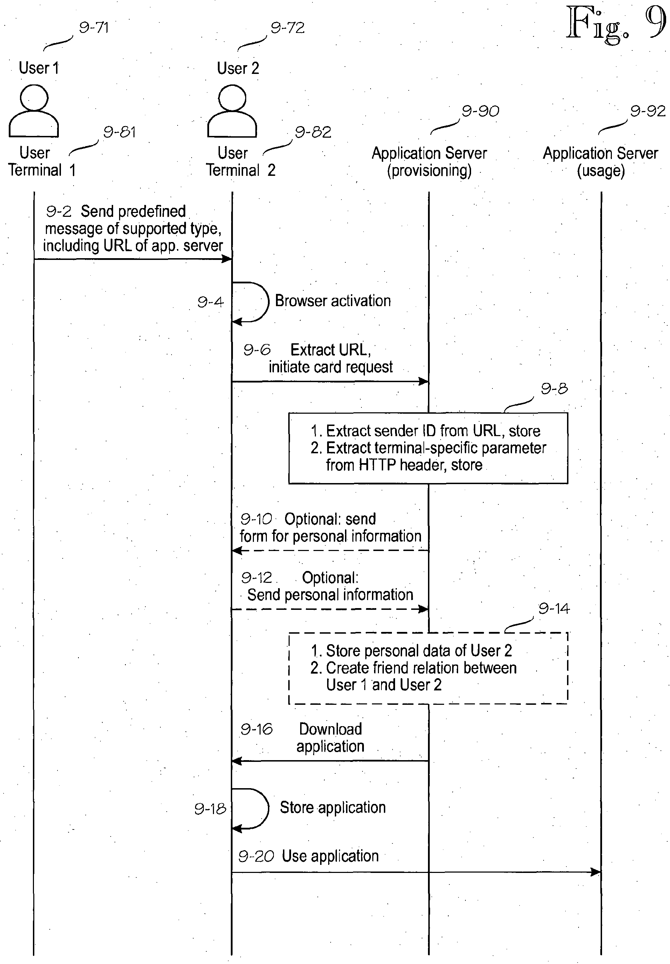

Figure 9 illustrates use of community messages, in which friend relations within a community are utilized to facilitate distribution of customized applications. As used herein, the technical meaning of a friend relation is such that the recipient user of a message, on the basis of that fried relation, has reason to believe that the customized application provides some benefit to him/her. Accordingly, the recipient user is likely to classify the community message higher than an average advertising message. Thus the community messages are less likely to be discarded than average advertising messages, whereby this feature reduces waste or communication resources. Furthermore, the applications supported by the present invention have to be customized in respect of terminal-specific features and, optionally, user-specific features, which is why an application server cannot simply broadcast unsolicited applications to a number of terminals. Instead, a residual problem to be solved by the present invention is that the terminals have to be made to contact the application server, whereby the application server can determine the type of the terminals and customize the applications in respect of the terminal-specific properties.

The elements of Figure 9Figure 9 include two users, denoted by reference numerals 9-71 and 9-72, each of whom uses a respective user terminal 9-81, 9-82. The elements of Figure 9 further include an application server, which in the present example comprises an application provisioning portion 9-90 and an application usage portion 9-92. The application provisioning portion 9-90 generally corresponds to the application server 1-20 of Figure 1, in the sense that this portion generates and delivers the customized application to the user terminals. The application usage portion 9-92 generally corresponds to the loyalty card server 1-90 of Figure 1, in the sense that this portion supports the user terminals 9-81 and 9-82 during use. One should keep in mind, however, that applications supported by the present invention are not restricted to loyalty card applications.

Figure 9 illustrates a signalling diagram of a representative use case. Prior to the events illustrated in Figure 9, a sending user terminal 9-81 of user 9-71 has obtained a customized application. For example, the procedure described in connection with Figure 2 can be used. Alternatively, the sending user terminal 9-81 of user 9-71 may have been the recipient terminal 9-82 of recipient user 9-72 during an earlier execution of the procedure shown in Figure 9.

The process begins at step 9-2, in which the sending user 9-71 instructs the sending user terminal 9-81 to send a predefined message to recipient user terminal 9-82 of recipient user 9-72. The recipient user terminal 9-82 may be selected by normal means in the sending user terminal 9-81, such as by selecting the telephone number from the address book. The message of step 9-82 may be of any one of a large variety of appropriate message types, so long as the message is supported by both terminals 9-81 and 9-82. An illustrative but non-exhaustive list of appropriate message types includes connectionless or connection-oriented messages across a communication network. Examples of connectionless messages are short messages (SMS), such as simple text messages or multimedia messages. Examples of connection-oriented messages are e-mail messages, data calls or the like. The list of illustrative message types further includes short-range wired or wireless messages which bypass any communication networks, such peer-to-peer communication over Bluetooth, WLAN, infrared. or USB paths.

The message of step 9-2 comprises a link that indicates an URL of the application provisioning portion 9-90 of the application server. Thus the message of step 9-2 is analogous with message 2-10 shown in Figure 2, apart from the fact that message 9-2 is not sent by the application server but a friend 9-71 of the user 9-72 of terminal 9-82. In response to activity of user 9-72, such as activation of the link provided in the message 9-2, the terminal 9-82 activates its browser in step 9-4, analogously with step 2-12 shown in Figure 2. For example, the link sent from the terminal 9-72 to the terminal 9-82 may comprise an URL address in the form of http://web.fi/app.apkg or http://web.fi/app.123456, wherein "123456" is a predefined temporary identifier of the sending user 9-71.

Such a predefined temporary identifier of the sending user 9-71 can be accomplished in a variety of ways. For instance, a stand-alone application may be compiled on the fly, after modification of the application source code to comprise the predefined temporary identifier. The application may also be packaged on the fly, such that the application package comprises a number of predefined values. Alternatively, the predefined values may be comprised in an application descriptor file. As a yet further alternative, the user may input such predefined values to the application after downloading the application.

Steps 9-6 through 9-16 are again analogous with steps 2-14 through 2-26, in the sense that the terminal 9-82 requests the customized application, the application provisioning portion 9-90 of the application server utilizes the request to determine the type of the terminal, customizes the application and sends it to the terminal. Specifically, step 9-8 comprises determining the temporary ID of the user 9-72 on the basis of the URL and determining the type of the terminal 9-82 on the basis of the HTTP header of the message 9-6. For some application types steps 9-10 through 9-14 may be optional. Before step 9-14, the application server only knows a temporary (but not necessarily the real) identity of the user 9-72. In the present example, the number "123456" serves as the temporary identity.

Knowing a temporary identity may suffice for simple low-security applications, such as discount coupons. For higher-security applications, such as loyalty cards, the user 9-72 should send their personal information. For instance, the application server 9-90 may send a form (shown as step 9-10), which the user 9-72 may fill and send by means of the terminal 9-82. This step is shown as item 9-12. In a further optional step 9-14, the application server 9-90 may then store the personal information of user 9-72 and create a friend relation between user 9-71 and 9-72. In step 9-16, the application server 9-90 transmits the customized application to terminal 9-82. In step 9-18 the terminal 9-82 stores the customized application, and in step 9-20 the user 9-72 uses the application by means of the terminal 9-82. The use step 9-20 is analogous with step 2-30 described in connection with Figure 2.

As stated earlier, the second user 9-72 and second user terminal 9-82 may act as the first user 9-71 and user terminal 9-81 in one or more subsequent executions of the procedure shown in Figure 9. This means that information on a potentially useful application is conveyed in peer-to-peer community messages, while each application is individually customized in respect of the terminal-specific properties of each user's terminal. Additionally, each application may be individually customized in respect of user-specific properties. Thus the procedure shown in Figure 9 combines peer-to-peer distribution of information with server-to-client provisioning of individually customized applications.

The procedure shown herein may be supplemented by further optional features. For instance, additional optional information may be may be incorporated into the link to the URL of the application server, such as the location of the sender and/or the MSISDN (telephone) number of the recipient user terminal.

It was stated above that in some implementations the application server 9-90 may send a form, which the user 9-72 may fill and send by means of the terminal 9-82. Implementing such a form makes it possible to eliminate steps 2-2 through 2-6 described in connection with Figure 2 and yet provide user terminals with applications which are customized in respect of user-specific parameters. For instance, the user 9-72 may fill the form, from which the application server 9-90 obtains user-specific parameters. The application server 9-90 also learns the terminal's user agent. The application server 9-90 may then inquire the equipment database for the terminal-specific parameters and generate an application which is customized in respect of user-specific as well as terminal-specific parameters.

It was also stated above that the application server 9-90 may store the personal information of user 9-72 and create a friend relation between user 9-71 and 9-72. W3C consortium provides a "FOAF" (Friend Of A Friend) technology, which may be used for such purposes.

It is readily apparent to a person skilled in the art that, as the technology advances, the inventive concept can be implemented in various ways. The invention and its embodiments are not limited to the examples described above but may vary within the scope of the claims.

### Reference documents

1. Finnish patent application 20095696, filed 18 June 2009
2. PCT application PCT/FI2010/050505, filed 16 June 2010
3. US patent application 12/817,527, filed 17 June 2010

## Claims

1. A method for providing a respective customized application to a plurality of user terminals (1-80; 6-80; 7-80₁ ... 7-80ₙ; 9-81), each of which comprises a web browser, wherein the customized application is customized in respect of at least terminal-specific properties and user-specific parameters, and the plurality of user terminals comprises at least a first user terminal and a second user terminal, the first user terminal, which is not the same terminal as the second user terminal, stores a version of the customized application;
the method comprising:
- an application server storing identifying information on the user terminals and/or their associated subscriptions;
- the application server storing a template for the customized application and a feature set for each of several terminal types, wherein the template defines functionality of the customized application;
- the first user terminal sending a community message (9-2) to the second user terminal (9-82), which is selectable via a user interface of the first user terminal (9-81); wherein the community message (9-2) comprises a link for directing the second user terminal to a network address of the application server;
- wherein activation of the link in the second user terminal initiates transmission of an http page request (2-14, 9-6) by the web browser to the application server for creation of the customized application;
- the application server determining identifying information of the second user terminal and/or its associated subscription, and a type of the second user terminal based on the http page request (2-14, 9-6) for the customized application;
- the application server determining the terminal-specific properties based on the determined type of the second user terminal;
- the application server determining the user-specific parameters;
- the application server creating the customized application based on the template and the terminal-specific properties and the user-specific parameters;
- wherein the customized application comprises a feature to send the community message (9-2) to at least one further user terminal (9-82) other than the second user terminal, which is selectable via a user interface of the second user terminal (9-81); and
- inserting the customized application into a set of delivery files for a data communication system (1-50) and transmitting (2-26) the set of delivery files to the second user terminal along with a manipulated header, as a result of which the application server is able to send the customized application as a response to the http page request (2-14, 9-6);
- whereby the respective customized application automatically includes the functionality of the customized application, the terminal-specific properties and the user-specific parameters.

2. The method according to claim 1, wherein the customized application is a web application, wherein execution of the web application requires a copy of the web application at each of a client and server, the method further comprising: the application server caching the customized web application and/or parameters for re-creating the customized web application at least for a specified validity period of the customized web application.

3. The method according to claim 1, wherein the step of receiving the user-specific parameters comprises transmitting a form (9-10) to the second user terminal and receiving the user-specific parameters in connection with the form, as filled in the second user terminal.

4. The method according to any one of the preceding claims, wherein the determination of the terminal-specific properties based on the determined type of the second user terminal comprises an inquiry to an equipment database (1-24).

5. The method according to any one of the preceding claims, wherein the creation of the customized application based on the terminal-specific properties comprises formatting image information based on the screen properties of the second user terminal.

6. The method according to any one of the preceding claims, wherein the template for the customized application comprises information common to several human languages, and the creation of the customized application also comprises determination of a human language and retrieval of human-language-dependent text elements from a language database (1-25).

7. The method according to any one of the preceding claims, wherein the link in the customized application comprises a concatenation of a network address and identifying information, wherein the network address specifies an address for contacting by the second user terminal and the identifying information identifies the second user terminal, its user and/or the customized application.

8. The method according to claim 7, wherein the customized application comprises said concatenation in an encrypted form.

9. The method according to any one of the preceding claims, further comprising: the application server and/or the customized application checking that the user terminals transmitting and receiving the community message are not the same user terminal.

10. The method according to any one of the preceding claims, wherein the community message includes said identifying information of the first user terminal and/or its associated subscription.

11. The method according to any one of the preceding claims, wherein the application server further determines identifying information of the first user terminal and/or its associated subscription.

12. An application server configured to provide a respective customized application to a plurality of user terminals (1-80; 6-80; 7-80₁ ... 7-80ₙ; 9-81) each of which comprises a web browser, wherein the customized application is customized in respect of at least terminal-specific properties and user-specific parameters, and the plurality of user terminals comprises at least a first user terminal and a second user terminal, the first user terminal, which is not the same terminal as the second user terminal, stores a version of the customized application;
the application server comprising:
- a database for storing identifying information on the user terminals and/or their associated subscriptions, and for storing a template for the customized application and a feature set for each of several terminal types, wherein the template defines functionality of the customized application;
- means for receiving an http page request (2-14, 9-6) from the web browser for creation of the customized application;
- means for determining identifying information of the second user terminal and/or its associated subscription, and a type of the second user terminal based on the http page request (2-14, 9-6) for the customized application;
- means for determining the terminal-specific properties based on the determined type of the user terminal;
- means for determining the user-specific parameters;
- means for creating the customized application based on the template and the terminal-specific properties;
- wherein the customized application comprises a feature to send a community message (9-2) to at least one further user terminal (9-82) other than the second user terminal, which is selectable via a user interface of the second user terminal (9-81); and
- means for inserting the customized application into a set of delivery files for a data communication system (1-50) and for transmitting (2-26) the set of delivery files to the second user terminal along with a manipulated header, as a result of which the application server is able to send the customized application as a response to the http page request (2-14, 9-6);
- whereby the respective customized application automatically includes the functionality of the customized application, the terminal-specific properties and the user-specific parameters.

## Patentansprüche

1. Verfahren zum Bereitstellen einer entsprechend angepassten Anwendung für eine Mehrzahl von Benutzerendgeräten (1-80; 6-80; 7-80₁ ... 7-80ₙ; 9-81), jedes dieser umfassend einen Webbrowser, wobei die angepasste Anwendung bezüglich an zumindest Endgerät-spezifische Eigenschaften und Benutzer-spezifische Parameter angepasst ist und wobei die Mehrzahl von Benutzerendgeräten zumindest ein erstes Benutzerendgerät und ein zweites Benutzerendgerät umfasst, wobei das erste Benutzerendgerät, das von dem zweiten Benutzerendgerät verschieden ist, eine Version der angepassten Anwendung speichert; das Verfahren umfassend:
- einen Anwendungsserver, kennzeichnende Informationen über die Benutzerendgeräte und/oder ihrer zugehörigen Abonnements speichernd;
- der Anwendungsserver eine Vorlage für die angepasste Anwendung und einen Merkmalssatz für jeden von verschiedenen Endgerätetypen speichernd, wobei die Vorlage die Funktionalität der angepassten Anwendung definiert;
- das erste Benutzerendgerät eine Gemeinschaftsnachricht (9-2) zu dem zweiten Benutzerendgerät (9-82), welches über eine Benutzerschnittstelle des ersten Benutzerendgerätes (9-81) auswählbar ist, sendend; wobei die Gemeinschaftsnachricht (9-2) einen Link zum Leiten des zweiten Benutzerendgerätes zu einer Netzwerkadresse des Anwendungsservers umfasst;
- wobei Aktivierung des Links in dem zweiten Benutzerendgerät eine Übertragung einer http-Seitenanfrage (2-14, 9-6) des Webbrowsers an den Anwendungsserver zum Erstellen der angepassten Anwendung einleitet;
- der Anwendungsserver die kennzeichnenden Informationen des zweiten Benutzerendgerätes und/oder seinem zugehörigen Abonnement und einen Typ des zweiten Benutzerendgerätes bestimmend, basierend auf der http-Seitenanfrage (2-14, 9-6) für die angepasste Anwendung;
- der Anwendungsserver die Endgerät-spezifischen Eigenschaften bestimmend, basierend auf dem bestimmten Typ des zweiten Benutzerendgerätes;
- der Anwendungsserver die Benutzer-spezifischen Parameter bestimmend;
- der Anwendungsserver die angepasste Anwendung erstellend, basierend auf der Vorlage und den die Endgerät-spezifischen Eigenschaften und den Benutzer-spezifischen Parametern;
- wobei die angepasste Anwendung eine Funktion zum Senden der Gemeinschaftsnachricht (9-2) zu neben dem zweiten Benutzerendgerät zumindest einem weiteren Benutzerendgerät (9-82) umfasst, welches über eine Benutzerschnittstelle des zweiten Benutzerendgerätes (9-81) auswählbar ist; und
- Einsetzen der angepassten Anwendung in einen Satz von Lieferdateien für ein Datenkommunikationssystem (1-50) und Übertragen (2-26) des Satzes von Lieferdateien zusammen mit einer manipulierten Kopfzeile zu dem zweiten Benutzerendgerät, als Folge dessen der Anwendungsserver in der Lage ist, die angepasste Anwendung als Antwort auf die http-Seitenanfrage (2-14, 9-6) zu senden;
- wobei die entsprechend angepasste Anwendung automatisch die Funktionalität der angepassten Anwendung, die Endgerät-spezifischen Eigenschaften und die Benutzer-spezifischen Parametern aufweist.

2. Verfahren nach Anspruch 1, wobei die angepasste Anwendung eine Webanwendung ist, wobei Ausführung der Webanwendung eine Kopie der Webanwendung sowohl auf einem Client als auch einem Server erfordert, das Verfahren weiterhin umfassend:
der Anwendungsserver zwischenspeichernd die Webanwendung und/oder Parameter zum Wiederherstellen der angepassten Webanwendung zumindest für eine spezifische Gültigkeitsdauer der angepassten Webanwendung.

3. Verfahren nach Anspruch 1, wobei der Schritt des Empfangens der Benutzer-spezifischen Parameter Übertragen eines Formulars (9-10) zu dem zweiten Benutzerendgerät und Empfangen der Benutzer-spezifischen Parameter in Verbindung mit dem Formular, wie von dem zweiten Benutzerendgerät ausgefüllt, umfasst.

4. Verfahren nach einem der vorhergehenden Ansprüche, wobei das Bestimmen der Endgerät-spezifische Eigenschaften basierend auf dem Typ des zweiten Benutzerendgerätes eine Anfrage an die Ausrüstungsdatenbank (1-24) umfasst.

5. Verfahren nach einem der vorhergehenden Ansprüche, wobei das Erstellen der angepassten Anwendung basierend auf Endgerätespezifischen Eigenschaften Formatieren von Bildinformationen basierend auf den Bildschirmeigenschaften des zweiten Benutzerendgerätes umfasst.

6. Verfahren nach einem der vorhergehenden Ansprüche, wobei die Vorlage für die angepasste Anwendung Informationen umfasst, die verschiedenen menschlichen Sprachen gemein sind, und das Erstellen der angepassten Anwendung weiterhin Bestimmen einer menschlichen Sprache und den Abruf von auf die menschliche Sprache rückbezogenen Textelementen aus einer Sprachendatenbank (1-25) umfasst.

7. Verfahren nach einem der vorhergehenden Ansprüche, wobei der Link in der angepassten Anwendung eine Verkettung einer Netzwerkadresse mit kennzeichnenden Informationen umfasst, wobei die Netzwerkadresse eine Adresse zum Kontaktieren durch das zweite Benutzerendgerät spezifiziert und die kennzeichnenden Informationen das zweite Benutzerendgerät, dessen Benutzer und/oder die angepasste Anwendung identifizieren.

8. Verfahren nach Anspruch 7, wobei die angepasste Anwendung die Verkettung in einer verschlüsselten Form umfasst.

9. Verfahren nach einem der vorhergehenden Ansprüche, weiterhin umfassend:
der Anwendungsserver und/oder die angepasste Anwendung kontrollierend, dass die Benutzerendgeräte, die die Gemeinschaftsnachricht übertragen und empfangen nicht dieselben Benutzerendgeräte sind.

10. Verfahren nach einem der vorhergehenden Ansprüche, wobei die Gemeinschaftsnachricht die kennzeichnenden Informationen des ersten Benutzerendgerätes und/oder dessen zugehöriges Abonnement umfassen.

11. Verfahren nach einem der vorhergehenden Ansprüche, wobei der Anwendungsserver weiterhin kennzeichnende Informationen des ersten Benutzerendgerätes und/oder dessen zugehöriges Abonnement bestimmt.

12. Anwendungsserver ausgebildet zum Bereitstellen einer entsprechend angepassten Anwendung für eine Mehrzahl von Benutzerendgeräten (1-80; 6-80; 7-80₁ ... 7-80ₙ; 9-81), jedes dieser umfassend einen Webbrowser, wobei die angepasste Anwendung bezüglich an zumindest Endgerät-spezifische Eigenschaften und Benutzer-spezifische Parameter angepasst ist und wobei die Mehrzahl von Benutzerendgeräten zumindest ein erstes Benutzerendgerät und ein zweites Benutzerendgerät umfasst, wobei das erste Benutzerendgerät, das von dem zweiten Benutzerendgerät verschieden ist, eine Version der angepassten Anwendung speichert; der Anwendungsserver umfassend:
- eine Datenbank zum Speichern kennzeichnender Informationen über die Benutzerendgeräte und/oder ihrer zugehörigen Abonnements und zum Speichern einer Vorlage für die angepasste Anwendung und eines Merkmalssatzes für jeden von verschiedenen Endgerätetypen, wobei die Vorlage die Funktionalität der angepassten Anwendung definiert;
- Mittel zum Empfangen einer http-Seitenanfrage (2-14, 9-6) von dem Webbrowser zum Erstellen der angepassten Anwendung;
- Mittel zum Bestimmen kennzeichnender Informationen des zweiten Benutzerendgerätes und/oder seines zugehörigen Abonnements, und eines Typs des zweiten Benutzerendgerätes basierend auf der http-Seitenanfrage (2-14, 9-6) für die angepasste Anwendung;
- Mittel zum Bestimmen der Endgerät-spezifische Eigenschaften basierend auf dem bestimmten Typ des Benutzerendgerätes;
- Mittel zum Bestimmen der Benutzer-spezifische Parameter;
- Mittel zum Erstellen der angepassten Anwendung basierend auf der Vorlage und den Endgerät-spezifische Eigenschaften;
- wobei die angepasste Anwendung eine Funktion zum Senden einer Gemeinschaftsnachricht (9-2) zu neben dem zweiten Benutzerendgerät zumindest einem weiteren Benutzerendgerät (9-82) umfasst, welches über eine Benutzerschnittstelle des zweiten Benutzerendgerätes (9-81) auswählbar ist; und
- Mittel zum Einsetzen der angepassten Anwendung in einen Satz von Lieferdateien für ein Datenkommunikationssystem (1-50) und zum Übertragen (2-26) des Satzes von Lieferdateien zusammen mit einer manipulierten Kopfzeile zu dem zweiten Benutzerendgerät, als Folge dessen der Anwendungsserver in der Lage ist, die angepasste Anwendung als Antwort auf die http-Seitenanfrage (2-14, 9-6) zu senden;
- wobei die entsprechend angepasste Anwendung automatisch die Funktionalität der angepassten Anwendung, die Endgerät-spezifischen Eigenschaften und die Benutzer-spezifischen Parametern aufweist.

## Revendications

1. Procédé de fourniture d'une application personnalisée respective à une pluralité de terminaux utilisateurs (1-80 ; 6-80 ; 7-80₁ ... 7-80ₙ ; 9-81), dont chacun comprend un navigateur web, dans lequel l'application personnalisée est personnalisée par rapport à au moins des propriétés spécifiques aux terminaux et des paramètres spécifiques aux utilisateurs et la pluralité de terminaux utilisateurs comprennent au moins un premier terminal utilisateur et un deuxième terminal utilisateur, le premier terminal utilisateur, qui n'est pas le même terminal que le deuxième terminal utilisateur, stocke une version de l'application personnalisée ;
le procédé comprenant :
- un serveur d'application stockant des informations d'identification sur les terminaux utilisateurs et/ou leurs souscriptions associées ;
- le serveur d'application stockant un modèle pour l'application personnalisée et un jeu de caractéristiques pour chacun des multiples types de terminaux, dans lequel le modèle définit la fonctionnalité de l'application personnalisée ;
- le premier terminal utilisateur envoyant un message collectif (9-2) au deuxième terminal utilisateur (9-82), qui est sélectionnable via une interface utilisateur du premier terminal utilisateur (9-81) ; dans lequel le message collectif (9-2) comprend une liaison pour diriger le deuxième terminal utilisateur vers une adresse de réseau du serveur d'application ;
- dans lequel l'activation de la liaison dans le deuxième terminal utilisateur initie la transmission d'une demande de page http (2-14, 9-6) par le navigateur web au serveur d'application pour la création de l'application personnalisée ;
- le serveur d'application déterminant des informations d'identification du deuxième terminal utilisateur et/ou de sa souscription associée et un type du deuxième terminal utilisateur sur la base de la demande de page http (2-14, 9-6) pour l'application personnalisée ;
- le serveur d'application déterminant les propriétés spécifiques aux terminaux sur la base du type déterminé du deuxième terminal utilisateur ;
- le serveur d'application déterminant les paramètres spécifiques aux utilisateurs ;
- le serveur d'application créant l'application personnalisée sur la base du modèle et des propriétés spécifiques aux terminaux ainsi que des paramètres spécifiques aux utilisateurs ;
- dans lequel l'application personnalisée comprend une caractéristique pour envoyer le message collectif (9-2) à au moins un autre terminal utilisateur (9-82) autre que le deuxième terminal utilisateur, qui est sélectionnable via une interface utilisateur du deuxième terminal utilisateur (9-81) ; et
- l'insertion de l'application personnalisée dans un jeu de fichiers de fourniture pour un système de communication de données (1-50) et la transmission (2-26) du jeu de fichiers de fourniture au deuxième terminal utilisateur conjointement avec une en-tête manipulée, à la suite de quoi le serveur d'application est à même d'envoyer l'application personnalisée en réponse à la demande de page http (2-14, 9-6) ;
- de sorte que l'application personnalisée respective comprenne automatiquement la fonctionnalité de l'application personnalisée, les propriétés spécifiques aux terminaux et les paramètres spécifiques aux utilisateurs.

2. Procédé selon la revendication 1, dans lequel l'application personnalisée est une application web, dans lequel l'exécution de l'application web requiert une copie de l'application web de chacun d'un client et d'un serveur, le procédé comprenant en outre le fait que le serveur d'application mette en cache l'application web personnalisée et/ou les paramètres pour recréer l'application web personnalisée au moins sur une période de validité spécifiée de l'application web personnalisée.

3. Procédé selon la revendication 1, dans lequel l'étape de réception des paramètres spécifiques aux utilisateurs comprend la transmission d'un formulaire (9-10) au deuxième terminal utilisateur et la réception des paramètres spécifiques aux utilisateurs en liaison avec le formulaire, tel qu'il est rempli dans le deuxième terminal utilisateur.

4. Procédé selon l'une quelconque des revendications précédentes, dans lequel la détermination des propriétés spécifiques aux terminaux sur la base du type déterminé du deuxième terminal utilisateur comprend une interrogation d'une base de données (1-24) de l'équipement.

5. Procédé selon l'une quelconque des revendications précédentes, dans lequel la création de l'application personnalisée sur la base des propriétés spécifiques aux terminaux comprend le formatage d'informations d'image sur la base des propriétés d'écran du deuxième terminal utilisateur.

6. Procédé selon l'une quelconque des revendications précédentes, dans lequel le modèle pour l'application personnalisée comprend des informations communes à plusieurs langages humains et la création de l'application personnalisée comprend également la détermination d'un langage humain et la récupération d'éléments de texte dépendant d'un langage humain auprès d'une base de données de langage (1-25).

7. Procédé selon l'une quelconque des revendications précédentes, dans lequel la liaison dans l'application personnalisée comprend une concaténation d'adresses de réseau et d'informations d'identification, dans lequel l'adresse de réseau spécifie une adresse pour venir en contact avec le deuxième terminal utilisateur et les informations d'identification identifient le deuxième terminal utilisateur, son utilisateur et/ou l'application personnalisée.

8. Procédé selon la revendication 7, dans lequel l'application personnalisée comprend ladite concaténation sous forme cryptée.

9. Procédé selon l'une quelconque des revendications précédentes, comprenant en outre le serveur d'application et/ou l'application personnalisée contrôlant que les terminaux utilisateurs émettant et recevant le message collectif ne sont pas le même terminal utilisateur.

10. Procédé selon l'une quelconque des revendications précédentes, dans lequel le message collectif comprend lesdites informations d'identification du premier terminal utilisateur et/ou de sa souscription associée.

11. Procédé selon l'une quelconque des revendications précédentes, dans lequel le serveur d'application détermine en outre des informations d'identification du premier terminal utilisateur et/ou de sa souscription associée.

12. Serveur d'application configuré pour fournir une application personnalisée respective à une pluralité de terminaux utilisateurs (1-80 ; 6-80 ; 7-80₁ ... 7-80ₙ ; 9-81), dont chacun comprend un navigateur web, dans lequel l'application personnalisée est personnalisée par rapport à au moins des propriétés spécifiques aux terminaux et des paramètres spécifiques aux utilisateurs et la pluralité de terminaux utilisateurs comprennent au moins un premier terminal utilisateur et un deuxième terminal utilisateur, le premier terminal utilisateur qui n' est pas le même terminal que le deuxième terminal utilisateur stocke une version de l'application personnalisée ;
le serveur d'application comprenant :
- une base de données pour stocker des informations d'identification sur les terminaux utilisateurs et/ou leurs souscriptions associées et pour stocker un modèle pour l'application personnalisée et un jeu de caractéristiques pour chacun des multiples types de terminaux, dans lequel le modèle définit une fonctionnalité de l'application personnalisée ;
- des moyens pour recevoir une demande de page http (2-14, 9-6) du navigateur web pour la création de l'application personnalisée ;
- des moyens pour déterminer des informations d'identification du deuxième terminal utilisateur et/ou de sa souscription associée et un type du deuxième terminal utilisateur sur la base de la demande de page http (2-14, 9-6) pour l'application personnalisée ;
- des moyens pour déterminer les propriétés spécifiques aux terminaux sur la base du type déterminé du terminal utilisateur ;
- des moyens pour déterminer les paramètres spécifiques aux utilisateurs ;
- des moyens pour créer l'application personnalisée sur la base du modèle et des propriétés spécifiques aux terminaux ;
- dans lequel l'application personnalisée comprend une caractéristique pour envoyer un message collectif (9-2) à au moins un autre terminal utilisateur (9-82) autre que le deuxième terminal utilisateur, qui est sélectionnable via une interface utilisateur du deuxième terminal utilisateur (9-81) ; et
- des moyens pour insérer l'application personnalisée dans un jeu de fichiers de fourniture pour un système de communication de données (1-50) et pour transmettre (2-26) le jeu de fichiers de fourniture au deuxième terminal utilisateur conjointement avec une en-tête manipulée, à la suite de quoi le serveur d'application est à même d'envoyer l'application personnalisée en réponse à la demande de page http (2-14, 9-6) ;
- de sorte que l'application personnalisée respective comprenne automatiquement la fonctionnalité de l'application personnalisée, les propriétés spécifiques aux terminaux et les paramètres spécifiques aux utilisateurs.
